# EUROPÄISCHE PATENTSCHRIFT

(11) **EP 0 791 423 B1**
(45) Veröffentlichungstag und Bekanntmachung des Hinweises auf die Patenterteilung: **31.05.2000**
(21) Anmeldenummer: 97100292.8
(22) Anmeldetag: 10.01.1997
(51) Int. Cl.: B23B 51/00

(54) **Bohrerhaltevorrichtung mit einem Bohrer**
Drill holding device with a drill
Dispositif porte-foret avec un foret

(30) Priorität: 26.01.1996 AT 3996
(43) Veröffentlichungstag der Anmeldung: 27.08.1997
(73) Patentinhaber: Julius Blum Gesellschaft m.b.H., 6973 Höchst (AT)
(72) Erfinder: Sutterlütti, Harald, 6972 Fussach (AT)
(74) Vertreter: Torggler, Paul Norbert

(56) Entgegenhaltungen:
- EP-A- 0 345 815
- DE-A- 2 331 467
- DE-A- 3 842 683
- DE-U- 8 907 278
- US-A- 2 168 176

## Beschreibung

Die Erfindung bezieht sich auf eine Bohrerhaltevorrichtung mit einem einzigen Bohrer, der in einer Aufnahmeeinrichtung um eine Achse, die senkrecht zu seiner Drehachse ausgerichtet ist, kippbar gehalten ist, wobei die Aufnahmeeinrichtung ein inneres und ein äußeres zylindrisches Gehäuse sowie eine Druckfeder umfaßt.

Insbesondere bei Bohrlöchern in Möbelteilen, die der Verankerung von Dübeln dienen, ist es vorteilhaft, diese mit einem Hinterschnitt zu versehen. Ein derartiger Hinterschnitt verbessert die Verankerung des im allgemeinen aus Kunststoff hergestellten Dübels im Möbelteil. Eine Bohrerhaltevorrichtung der eingangs genannten Art ist unter DE 38 42 683 A1 beschrieben.

Aufgabe der Erfindung ist es daher, eine derartige Bohrerhaltevorrichtung mit Bohrer zu verbessern..

Die erfindungsgemäße Aufgabe wird dadurch gelöst, daß die Druckfeder im äußeren Gehäuse angeordnet ist und das innere Gehäuse, welches im äußeren Gehäuse verschiebbar ist, abstützt, daß der Bohrerschaft des Bohrers einen vorderen und einen hinteren Längsschlitz aufweist, wobei der vorderen Längsschlitz, der sich näher zur Bohrerspitze befindet, in der Längsachse des Bohrers ausgerichtet ist und der hintere Längsschlitz zumindestens einen Abschnitt aufweist, der in einem Winkel zu dieser Längsachse liegt, der kleiner als 90° ist, und daß Führungsbolzen, die in der Zylinderwand des äußeren Gehäuses gelagert sind, durch diese Schlitze ragen.

Mit der erfindungsgemäßen Bohrerhaltevorrichtung bohrt sich der Bohrer am Anfang des Bohrvorganges wie ein herkömmlicher Bohrer in das Werkstück und schafft einen zylindrischen Bohrbereich. Hat der Bohrer eine gewünschte, vorher eingestellte Bohrtiefe erreicht, kippt er um die senkrecht zu seiner Drehachse ausgerichtete Achse in der Aufnahmeeinrichtung. Dadurch dreht sich die Bohrspitze nicht nur um die eigene Achse, sondern beschreibt eine Kurve. Diese Kurve ist ohne Bohrvorschub kreisförmig. Bei einem stetig in das Werkstück eindringenden Bohrer beschreibt die Bohrspitze in etwa eine räumliche Spirale.

Mit einer derartigen Bohrerhaltevorrichtung werden Bohrlöcher in das Werkstück gebohrt, die, wie anschließend beschrieben, im hinteren Bereich mit unterschiedlich geformten Hinterschnitten versehen sind.

Ein weiteres Ausführungsbeispiel der Erfindung sieht vor, daß an der werkstückseitigen Basisfläche des äußeren Gehäuses ein Lager angeordnet ist, wobei mindestens ein Lagerring des Lagers über das äußere Gehäuse axial vorsteht und daß vorteilhaft das Lager axial versetzte Lagerringe aufweist.

Wie bereits erwähnt, wird bei einer derartigen Ausführung wird die Aufnahmeeinrichtung zuerst frei zum Werkstück hin bewegt, wobei der Bohrer senkrecht zum Werkstück ausgerichtet ist. Das Loch, das gebohrt wird, ist in diesem Bereich zylindrisch. Wenn das Lager auf dem Werkstück auftrifft und weiterhin Druck auf den Bohrer ausgeübt wird, wird der Bohrer gekippt und der Hinterschnitt gebildet. Das Lager verhindert dabei, daß die Drehgeschwindigkeit des Bohrers auf Grund der Reibung zwischen dem äußeren Gehäuse und dem Werkstück vermindert wird.

Ein weiteres Ausführungsbeispiel der Erfindung sieht vor, daß am inneren Gehäuse ein Antriebszapfen befestigt oder an diesem ausgebildet ist, der beispielsweise in einem Bohrfutter einer Bohrmaschine einspannbar ist.

Nachfolgend wird ein Ausführungsbeispiel der Erfindung anhand der Figuren der beiliegenden Zeichnungen beschrieben.
Die Fig. 1 zeigt einen Längsschnitt durch eine erfindungsgemäße Bohrerhaltevorrichtung mit Bohrer bevor die Aufnahmeeinrichtung auf das Werkstück auftrifft;
die Fig. 2 zeigt einen Längsschnitt durch eine Bohrerhaltevorrichtung mit Bohrer während der Bildung des Hinterschnittes;
die Fig. 3 zeigt ein schematisches Schaubild der Bohrerhaltevorrichtung mit Bohrer, wobei die Aufnahmeeinrichtung im Schnitt gezeigt ist;
die Fig. 4 zeigt einen Querschnitt durch die Bohrerhaltevorrichtung und
die Fig. 5 bis 10 zeigen schematisch jeweils einen Längsschnitt durch eine Bohrung und eine Seitenansicht des vorderen und hinteren Schlitzes im Bohrer.

Der erfindungsgemäße Bohrer 1 ist in einer Aufnahmeeinrichtung 2 gehalten, die von einem äußeren Gehäuse 3 und einem inneren Gehäuse 4 gebildet wird. Beide Gehäuse 3, 4 sind zylindrisch ausgeführt und das innere Gehäuse 4 ist im äußeren Gehäuse 3 in Axialrichtung gegen den Druck einer Feder 6 verschiebbar.

Im gezeigten Ausführungsbeispiel ist am inneren Gehäuse 4 ein Antriebszapfen 5 befestigt, der in einem Bohrfutter einer Bohrmaschine einspannbar ist. Im Ausführungsbeispiel ist der Antriebszapfen 5 mit einem Zapfen 7 in den Boden 8 des inneren Gehäuses 4 eingepreßt.

Das innere Gehäuse 4 weist an seiner zur Bohrerspitze 10 gerichteten Basisfläche einen Hohlzapfen 11 auf, der von der Druckfeder 6 umgeben wird und der dieser Halt gibt.

Die Druckfeder 6 stützt sich einerseits an einer Stirnfläche 12 des inneren Gehäuses 4 und andererseits an einer Innenfläche 13 einer Abschlußplatte 14 des äußeren Gehäuses 3 ab.

Bei seinem hinteren Ende ist das äußere Gehäuse 3 mit einem Sicherungsring 15 versehen, der verhindert, daß das innere Gehäuse 4 von der Feder 6 aus dem äußeren Gehäuse 3 herausgedrückt wird.

Werkstückseitig weist das äußere Gehäuse 3 eine Aufnahme 16 für ein Lager 17 auf. Das Lager 17 weist versetzte Lagerringe 18, 19 auf, zwischen denen Lagerkugeln 20 angeordnet sind.

Die Bohrerspitze 10 des Bohrers 1 ist mit einem nach hinten weisenden kegelstumpfförmigen Abschnitt 21 versehen, der die Ausbildung der Hinterschnitte 22 im Werkstück 23 erleichtert.

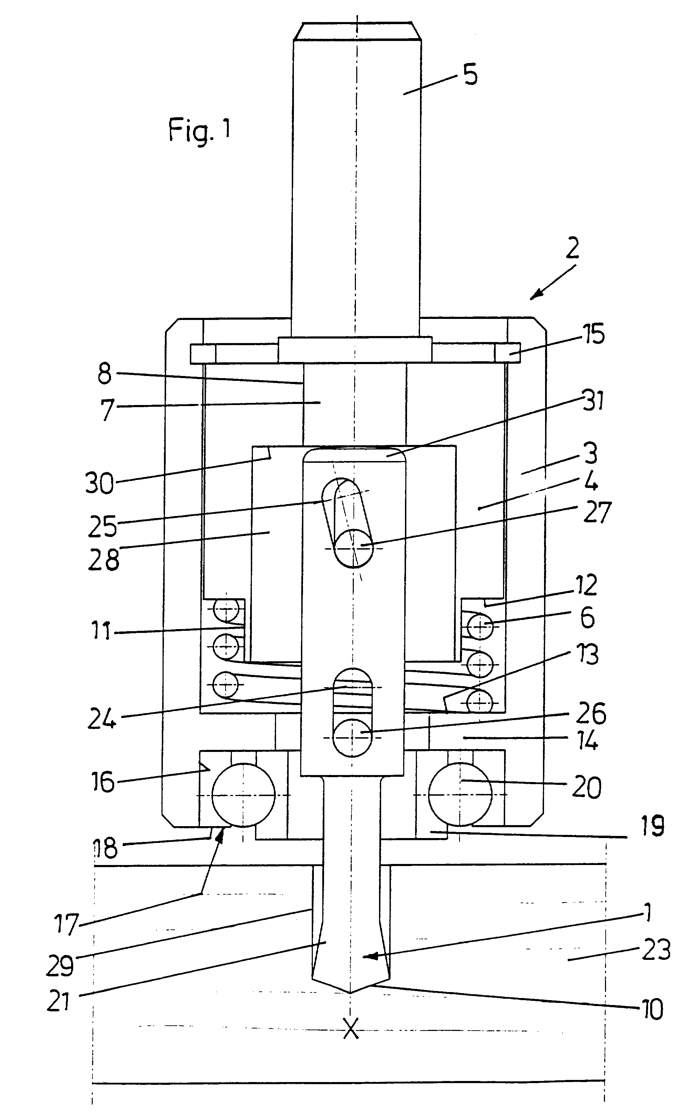

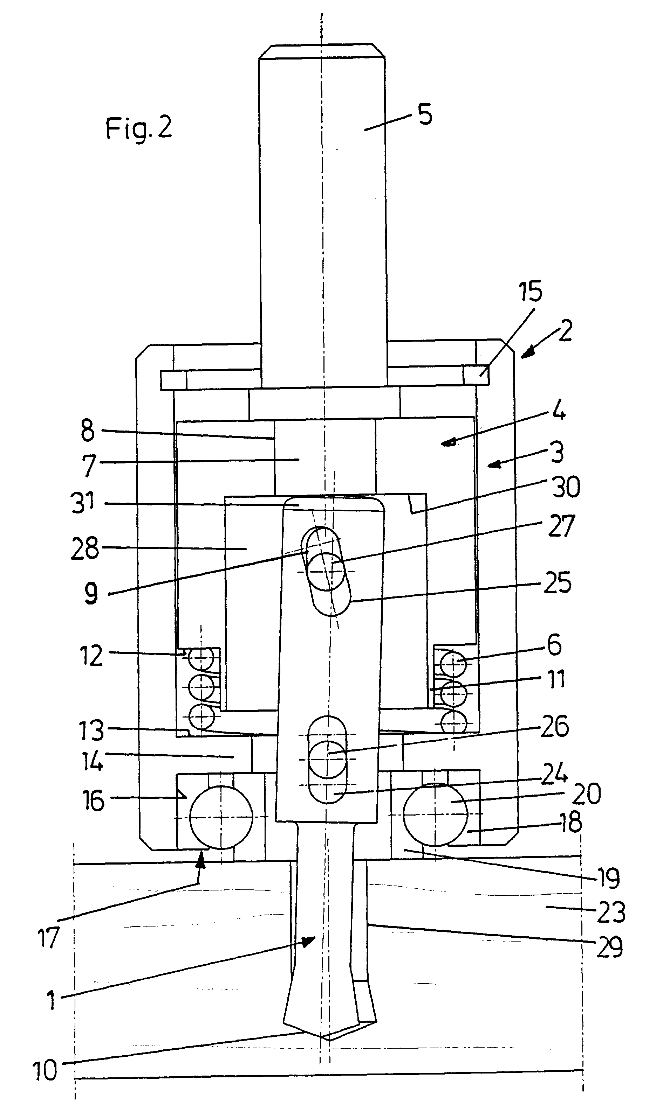

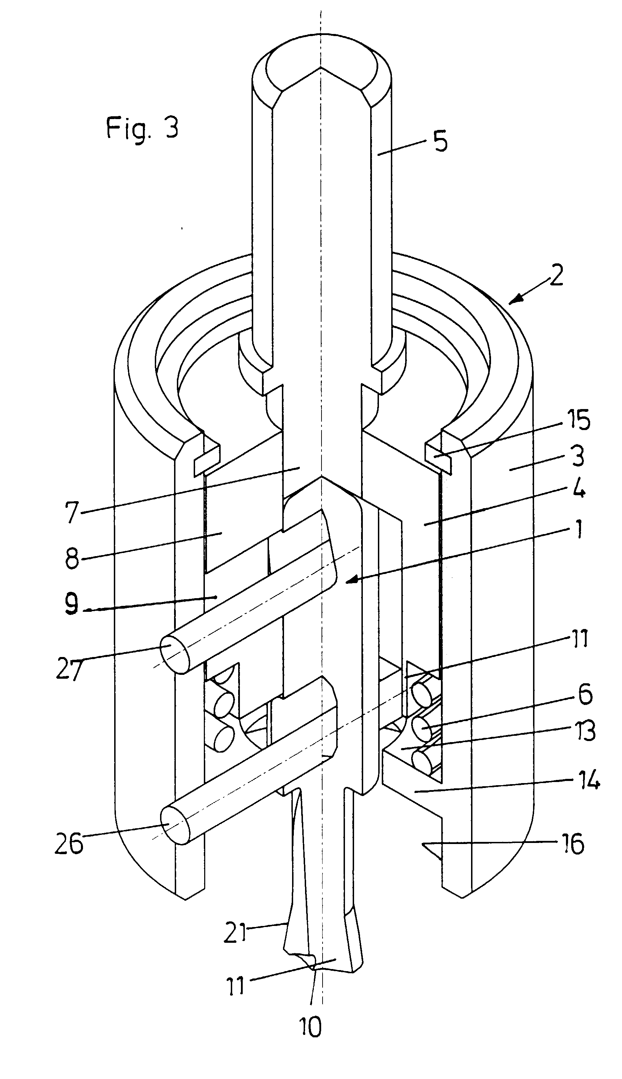

Der Bohrerschaft des Bohrers 1 weist einen vorderen Längsschlitz 24 und einen hinteren Längsschlitz 25 auf. Der vorderen Längsschlitz 24 befindet sich in der Drehachse des Bohrers 1. Der hintere Längsschlitz 25 ist schräg zu dieser ausgerichtet und liegt im Ausführungsbeispiel nach den Fig. 1 bis 4 in einem Winkel zur Drehachse x-x des Bohrers 1.

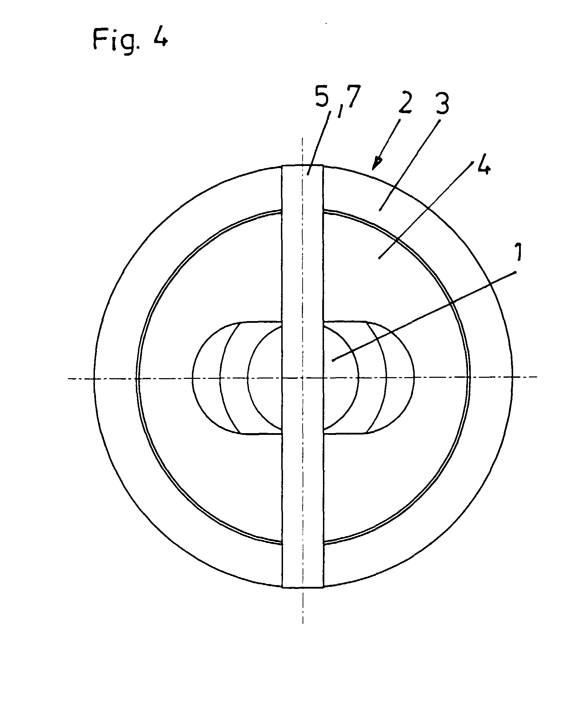

Durch die Längsschlitze 24, 25 ragen Führungsbolzen 26, 27, die im äußeren Gehäuse 3 verankert sind (siehe Fig. 4). Das innere Gehäuse 4 weist einen Hohlraum 28 auf, in dem das hintere Ende des Bohrers 1 aufgenommen ist und der dem hinteren Bohrerende 31 des Bohrers 1 genügend Platz gibt, um seitlich auszuschwenken.

Beim Bohren einer Bohrung 29 trifft zuerst die Spitze 10 des Bohrers 1 das Werkstück 23, und der Bohrer 1 bohrt wie ein normaler Bohrer ein zylindrisches Bohrloch. Wenn der Lagerring 19 des Lagers 17 am Werkstück 23 auftrifft, wird das äußere Gehäuse 3 in Axialrichtung gehalten. Die Drehbewegung des äußeren Gehäuses 3 wird wegen des Lagers 17 nicht behindert. Der Drehantrieb erfolgt dabei vom Antriebszapfen 5 über das innere Gehäuse 4 und die Führungsbolzen 26, 27 auf das äußere Gehäuse 3 sowie auf den Bohrer 1.

Wenn das äußere Gehäuse 3 in axialer Richtung festgehalten wird und weiterhin Druck über den Antriebszapfen 5 auf das innere Gehäuse 4 ausgeübt wird, wird die Feder 6 zusammengepreßt und das innere Gehäuse 4 drückt mit der Wand 30 auf das Bohrerende 31, wobei das innere Gehäuse 4 und somit der Bohrer 1 relativ zum äußeren Gehäuse 3 und relativ zu den Führungsbolzen 5, 7 weiter zum Werkstück 23 bewegt werden. Das innere Gehäuse 4 weist zwei Schlitze 9 auf, durch die die Führungsbolzen 26, 27 ragen. Diese Schlitze 9 ermöglichen die Relativbewegung zwischen dem inneren Gehäuse 4 und dem äußeren Gehäuse 3 mit dem Führungsbolzen 26, 27.

Durch die Schrägstellung des Längsschlitzes 25 wird der Bohrer 1 schräggestellt und dreht sich nicht nur um seine eigene Achse, sondern beschreibt mit der Bohrerspitze 10 eine Kurve, die in etwa einem Kreis bzw. einer räumlichen Spirale entspricht.

Dadurch wird im Bohrloch der Hinterschnitt 21 ausgebildet.

Wird kein axialer Druck mehr auf den Antriebszapfen 5 ausgeübt, drückt die Feder 6 das innere Gehäuse 4 mit dem Bohrer 1 in die Ausgangsstellung zurück.

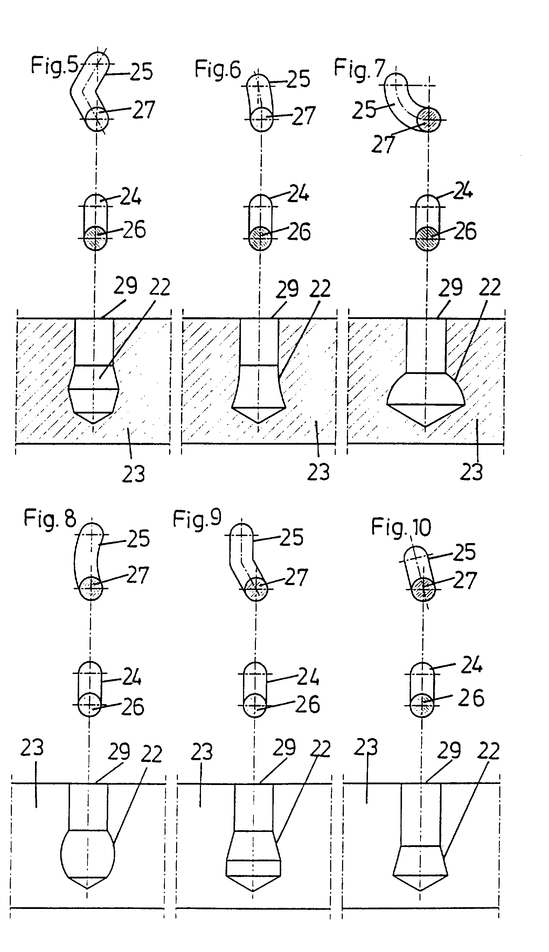

Durch eine verschiedenartige Ausbildung der hinteren Schlitze 25 können, wie in den Fig. 5 bis 10 gezeigt, verschiedene Formen von Hinterschneidungen 22 im Bohrloch 29 ausgebildet werden. Die Schlitze 25 können dabei geknickt (Fig. 5, Fig. 9), gebogen (Fig. 6 bis 8) oder gerade (Fig. 10) ausgebildet sein.

## Patentansprüche

1. Bohrerhaltevorrichtung mit einem einzigen Bohrer (1), der in einer Aufnahmeeinrichtung (2) um eine Achse, die senkrecht zu seiner Drehachse ausgerichtet ist, kippbar gehalten ist, wobei die Aufnahmeeinrichtung (2) ein inneres und ein äußeres zylindrisches Gehäuse (3, 4) sowie eine Druckfeder (6) umfaßt, die im äußeren Gehäuse (3) angeordnet ist und die das innere Gehäuse (4), welches zur Gänze im äußeren Gehäuse (3) aufgenommen und in diesem verschiebbar ist, abstützt, wobei der Bohrerschaft des Bohrers (1) einen vorderen Längsschlitz (24), der sich näher zur Bohrerspitze (10) befindet und der in der Längsachse (x-x) des Bohrers (1) ausgerichtet ist, aufweist und einen hinteren Längsschlitz (25), der zumindestens einen Abschnitt aufweist, der in einem Winkel zu dieser Längsachse (x-x) liegt, der kleiner als 90° ist, und mit zwei Führungsbolzen (26, 27), die in der Zylinderwand des äußeren Gehäuses (3) gelagert sind, die durch diese Schlitze (24, 25) ragen.

2. Bohrerhaltevorrichtung nach Anspruch 1, dadurch gekennzeichnet, daß an der werkstückseitigen Basisfläche des äußeren Gehäuses (3) ein Lager (17) angeordnet ist, wobei mindestens ein Lagerring (19) des Lagers (17) über das äußere Gehäuse (3) axial vorsteht.

3. Bohrerhaltevorrichtung nach Anspruch 2, dadurch gekennzeichnet, daß das Lager (17) axial versetzte Lagerringe (18, 19) aufweist.

4. Bohrerhaltevorrichtung nach einem der Ansprüche 1 bis 3, dadurch gekennzeichnet, daß am inneren Gehäuse (4) ein Antriebszapfen (5) befestigt oder an diesem ausgebildet ist, der beispielsweise in einem Bohrfutter einer Bohrmaschine einspannbar ist.

5. Bohrerhaltevorrichtung nach Anspruch 1, dadurch gekennzeichnet, daß das innere Gehäuse (4) einen Hohlzapfen (11) aufweist, den die Druckfeder (6) umgibt.

6. Bohrerhaltevorrichtung nach Anspruch 1, dadurch gekennzeichnet, daß der hintere Längsschlitz (25) einen Knick aufweist.

7. Bohrerhaltevorrichtung nach Anspruch 1, dadurch gekennzeichnet, daß der hintere Längsschlitz (25) gebogen verläuft.

8. Bohrerhaltevorrichtung nach einem der Ansprüche 1 bis 7, dadurch gekennzeichnet, daß die Spitze (10) des Bohrers (1) in an sich bekannter Weise einen kegelstumpfförmigen Bereich (21) aufweist, der sich zur Aufnahmeeinrichtung (2) hin verjüngt.

## Claims

1. Drill-holding device with a single drill (1) which is held in a receptacle (2) so as to be tiltable about an axis which is aligned perpendicular to its axis of rotation, the receptacle (2) comprising an inner and an outer cylindrical housing (3, 4) as well as a compression spring (6) which is disposed in the outer housing (3) and supports the inner housing (4) which is received in its entirety in the outer housing (3) and is displaceable in the latter, wherein the drill shank of the drill (1) has a front longitudinal slot (24), which is located closer to the drill tip (10) and is aligned in the longitudinal axis (x-x) of the drill (1), and a rear longitudinal slot (25) which has at least one portion which lies at an angle of less than 90° to this longitudinal axis (x-x), and with two guide bolts (26, 27) which are mounted in the cylinder wall of the outer housing (3) and project through these slots (24, 25).

2. Drill-holding device according to Claim 1, characterised in that a bearing (17) is disposed on the base surface of the outer housing (3) on the workpiece side, at least one bearing ring (19) of the bearing (17) projecting axially over the outer housing (3).

3. Drill-holding device according to Claim 2, characterised in that the bearing (17) has axially offset bearing rings (18, 19).

4. Drill-holding device according to one of claims 1 to 3, characterised in that a drive journal (5) which can be clamped for example in a drill chuck of a drilling machine is fixed or constructed on the inner housing (4).

5. Drill-holding device according to Claim 1, characterised in that the inner housing (4) has a hollow journal (11) which is surrounded by the compression spring (6).

6. Drill-holding device according to Claim 1, characterised in that the rear longitudinal slot (25) has a kink.

7. Drill-holding device according to Claim 1, characterised in that the rear longitudinal slot (25) extends in a curve.

8. Drill-holding device according to one of Claims 1 to 7, characterised in that in a manner which is known *per se* the tip (10) of the drill (1) has a region (21) in the shape of a truncated cone which tapers towards the receptacle (2).

## Revendications

1. Dispositif porte-foret avec un foret (1) unique qui est maintenu dans un dispositif de réception (2) de façon à pouvoir basculer autour d'un axe perpendiculaire à son axe de rotation, le dispositif de réception (2) comprenant une enveloppe intérieure (4) et une enveloppe extérieure (3) cylindriques ainsi qu'un ressort de pression (6) qui est disposé dans l'enveloppe extérieure (3) et qui supporte l'enveloppe intérieure (4) qui est logée en totalité dans l'enveloppe extérieure (3) et peut coulisser dans celle-ci, la tige du foret (1) présentant une fente longitudinale (24) avant qui se trouve plus près de la mèche de foret (10) et est orientée dans l'axe longitudinal (x-x) du foret (1) et une fente longitudinale (25) arrière qui présente au moins une partie qui forme avec cet axe longitudinal (x-x) un angle inférieur à 90°, et avec deux tiges de guidage (26, 27) qui sont montés dans la paroi cylindrique de l'enveloppe extérieure (3) et font saillie à travers ces fentes (24, 25).

2. Dispositif porte-foret selon la revendication 1, caractérisé en ce qu'un palier (17) est disposé sur la face de base, côté pièce à travailler, de l'enveloppe extérieure (3), au moins une bague (19) du palier (17) dépassant de l'enveloppe extérieure (3) dans la direction axiale.

3. Dispositif porte-foret selon la revendication 2, caractérisé en ce que le palier (17) présente des bagues de palier (18, 19) décalées dans la direction axiale.

4. Dispositif porte-foret selon une des revendications 1 à 3, caractérisé en ce qu'un tourillon d'entraînement (5) est fixé ou réalisé sur l'enveloppe intérieure (4), lequel tourillon d'entraînement peut être fixé par exemple dans un mandrin d'une perceuse.

5. Dispositif porte-foret selon la revendication 1, caractérisé en ce que l'enveloppe intérieure (4) présente un tourillon creux (11) qu'entoure le ressort de pression (6).

6. Dispositif porte-foret selon la revendication 1, caractérisé en ce que la fente longitudinale (25) arrière présente un coude.

7. Dispositif porte-foret selon la revendication 1, caractérisé en ce que la fente longitudinale (25) arrière est courbe.

8. Dispositif porte-foret selon une des revendications 1 à 7, caractérisé en ce que la pointe (10) du foret (1) comporte de manière connue une zone (21) de forme tronconique qui va en se rétrécissant en direction du dispositif de réception (2).
